# EUROPEAN PATENT SPECIFICATION

(11) **EP 0 665 390 B1**
(45) Date of publication and mention of the grant of the patent: **16.07.1997**
(21) Application number: 94120662.5
(22) Date of filing: 24.12.1994
(51) Int. Cl.: F16G 1/28

(54) **Toothed belt and method for producing the same**
Zahnriemen und sein Herstellungsverfahren
Courroie crantée et méthode de fabrication de celle-ci

(30) Priority: 28.12.1993 JP 349433/93
(43) Date of publication of application: 02.08.1995
(73) Proprietor: TSUBAKIMOTO CHAIN CO., Osaka-fu 538 (JP)
(72) Inventor: Fujiwara, Toru, Tokorozawa-shi, Saitama-ken (JP); Yoshinori, Itoh, Hanno-shi, Saitama-ken (JP)
(74) Representative: Naumann, Ulrich, Dr.-Ing.

(56) References cited:
- US-A- 4 762 745
- DATABASE WPI Week 7535, Derwent Publications Ltd., London, GB; AN 75-58294 & SU-A-456 811 (SHMURAK) 26 February 1975
- PATENT ABSTRACTS OF JAPAN vol. 16, no. 57 (M-1210) 13 February 1992 & JP-A-32 055 245 (YUNITSUTA KK) 14 November 1991
- DATABASE WPI Week 7535, Derwent Publications Ltd., London, GB; AN 75-58294 & SU-A-456 811
- PATENT ABSTRACTS OF JAPAN vol. 16, no. 57 (M-1210) 13 February 1992 & JP-A-32 055 245

## Description

### Background of the Invention

This invention relates generally to toothed belts for power transmission and to a method for producing the same. The invention has particular utility in a toothed belt for driving the camshaft of an automobile engine.

A conventional toothed belt is composed of a tension bearing member, e.g. a set of core wires, sandwiched between a rubber tooth portion, i.e. a "tooth rubber", and a rubber back portion, i.e. a "back rubber". The outer surface of the tooth rubber is covered by a tooth cloth, which usually comprises a polyamide (nylon).

In the manufacture of the belt, the tooth cloth is typically treated with a rubber paste the composition of which is essentially the same as that of the tooth rubber and the back rubber. Alternatively, the tooth rubber is treated with a resorcinol formaldehyde latex (RFL) solution including VP-SBR latex, i.e. vinyl pyridine - styrene butadiene rubber latex. As used herein, the term "treated" includes "being impregnated", "being submerged and thereafter dried", "being coated and thereafter dried" and equivalent operations. The tooth cloth treated with RFL solution may be further treated with a rubber paste. In the past, the tooth rubber and back rubber have typically been composed of CR (chloroprene). However, more recently, primarily as a result of the tendency toward increased horsepower in automobile engines, CR (chloroprene) has been displaced by HSN (hydrogenated nitrile) as the material of the tooth rubber and back rubber.

Because automobiles are essential and are becoming more and more sophisticated, maintenance-free engine parts are highly desirable. A toothed belt is an engine component which, in the past, has been especially subject to failure. A toothed belt having a long service life is therefore particularly desirable.

To improve the service life of a toothed belt, it is essential to identify the cause of belt failure. A toothed belt usually fails as it is severed or as its teeth break. The primary object of this invention is to improve the breaking strength of the teeth in a toothed belt.

Past efforts to improve the breaking strength of the teeth in a toothed belt have generally employed means to improve the anti-wear and heat-resisting properties of the tooth cloth. Efforts to improve the anti-wear properties have included increasing the amount of fiber per unit area of the tooth cloth, and improving the anti-wear properties of the fibers used in the tooth cloth. To improve the heat resisting properties of a tooth cloth, the cloth has been treated with HSN (hydrogenated nitrile) rubber paste.

### Summary of the Invention

Research indicates that the treating agent has some effect upon the heat-resisting property of the tooth cloth but greatly affects the anti-wear property of the tooth cloth. In the case of a belt covered with a polyamide tooth cloth in which no treating agent was used, it was noted that the tooth surface soon became nappy, and then it became like cotton and several teeth eventually broke. This result indicates that the tooth cloth is not only bonded to the tooth rubber as result of the treatment by the treating agent, but the tooth cloth is protected by the treating agent and the density of the tooth cloth is maintained as a result of the bonding. Consequently, the anti-wear properties of the belt tooth surface may be improved, tooth breaking strength may be increased, and durability of the belt may also be improved. The wear of the tooth cloth is attributable both to its contact with the pulleys and to the contact of the fibers of the belt with one another. The treating agent is believed to protect the tooth cloth from both causes of wear.

Research further indicates that the heat resisting property of the treating agent correlates with the anti-wear property. Normally, when a toothed belt is used under high temperature conditions, a heat-resisting treating agent is utilized.

A good heat-resisting treating agent does not harden itself; and does not contribute to improvement in the anti-wear properties of a tooth cloth. On the other hand, we have discovered that a treating agent whose heat-resisting property is inferior, can contribute to improvement in the anti-wear properties of the tooth cloth as a result of hardening. In particular, it has been found that the physical properties of the treating agent vary according to temperature, and that, in the case of a treating agent having poor heat-resisting properties, its anti-wear properties may be improved unexpectedly when the belt is used under high temperature conditions.

This invention prolongs the service life of a toothed belt by taking advantage of the heat hardening property of a treating agent for a tooth cloth. More specifically, the invention solves the above-mentioned problem by treating the tooth cloth with a particular RFL (resorcinol formaldehyde latex) solution.

It has been found that a toothed belt having both heat-resisting properties and anti-wear properties may be obtained by adjusting, within a suitable range, the following factors: the molecular ratio of resorcinol and formaldehyde; the weight ratio of carboxyl modified nitrile butadiene rubber and carboxyl modified hydrogenated nitrile butadiene rubber; the weight ratio of resorcinol formaldehyde solution ("RF solution") and latex solution ("L solution"); the carbon content of the RFL solution; and the amount of the solid portion of RFL adhering to the tooth cloth.

To be suitable, the molecular ratio of resorcinol to formaldehyde in the RF solution must be the in the range of 1:1 to 1:3.

The weight ratio of carboxyl modified nitrile butadiene rubber relative to carboxyl modified hydrogenated nitrile butadiene rubber should be in the range of 4:6 to 1:9. If the ratio is greater than 4:6, the heat-resistance of the tooth cloth becomes unsatisfactory and its service life may not be prolonged. On the other hand, if the ratio is less than 1:9, the anti-wear property may not be improved.

If the weight ratio of RF solution relative to L solution is greater than approximately 1:5, the tooth cloth may become unsuitably hard when the belt is formed. Consequently, formation of the belt becomes difficult. On the other hand, if the ratio of RF solution to L solution is smaller than 1:15, the adhesion of the tooth cloth to the tooth rubber becomes weak.

In the event the carbon content in the RFL solution is less than approximately 1 weight percent, the desired anti-wear property may not be obtainable. On the other hand, if the carbon content exceeds approximately 10 weight percent, the tooth cloth may become unsuitably hard when the belt is formed, and the heat-resistance will decrease. The carbon content in the RFL solution should therefore be in the range of 1% to 10% by weight, and is preferably in the range of 1% to 3% by weight.

Finally, if the solid content of RFL adhering to the tooth cloth is less than 5 weight percent, the bonding of the filaments in the tooth cloth may become poor, and consequently, the tooth rubber may separate from the filaments when the belt is formed. On the other hand, if the solid content of RFL adhering to the tooth cloth exceeds 30 weight percent, the formation of the teeth becomes difficult.

The invention, therefore, provides a toothed belt comprising a tooth rubber and a back rubber with an embedded bearing member, and a tooth cloth covering the tooth rubber, in which the tooth cloth is treated with a solution containing a mixture, at a weight ratio from 1:5 to 1:15, of a resorcinol formaldehyde solution containing resorcinol and formaldehyde at a molecular ratio from 1:1 to 1:3 and a latex solution containing carboxyl modified nitrile butadiene rubber and carboxyl modified hydrogenated nitrile rubber at a weight ratio from 4:6 to 1:9, the RFL solution further containing from 1% to 10 % by weight of carbon. The solid content adhering to the tooth cloth is from 5 to 30 weight %.

Further objects, details and advantages of the invention will be apparent from the following detailed description, when read in conjunction with the drawings.

### Brief Description of Drawings

FIG. 1 is a perspective view of a toothed belt;
FIG. 2 is a schematic view of a testing equipment of amount of wear;
FIG. 3 is a schematic view of a testing equipment of tooth breaking time;
FIG. 4 is a schematic view of a testing equipment of tooth breaking time;

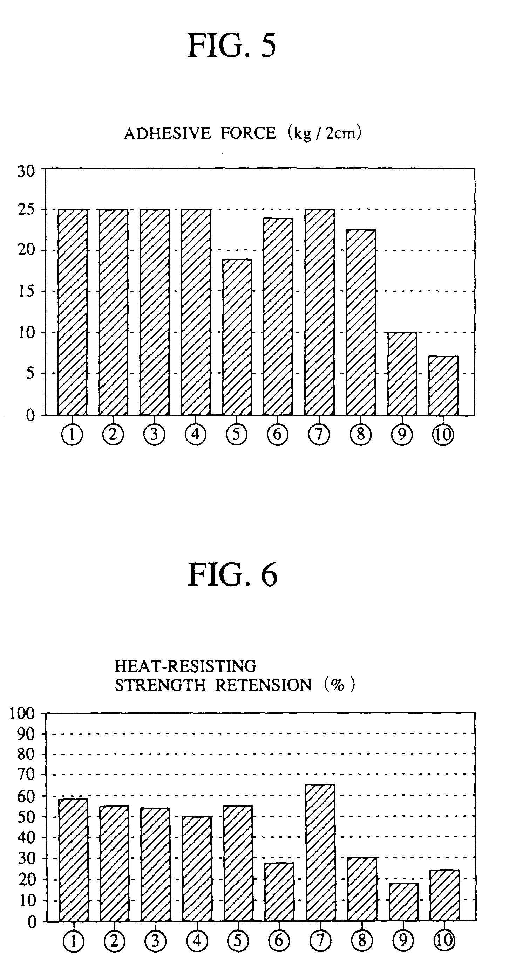

FIG. 5 is a diagram showing adhesive force between the tooth cloth and the tooth rubber having the tooth cloth treated with the agents shown in the tables;
FIG. 6 is a diagram showing heat-resisting strength retention of the tooth cloth treated with the agents shown in the tables;
FIG. 7 is a diagram showing the amount of wear of the tooth cloth treated with the agents shown in the tables;
FIG. 8 is a diagram showing the tooth breaking time of the tooth cloth treated with the agents shown in the tables;
FIG. 9 is a diagram showing the tooth breaking time of the tooth cloth treated with the agents shown in the tables; and
FIG. 10 is a diagram showing the tooth breaking time of the tooth cloth treated with the agents shown in the tables.

### Detailed Description

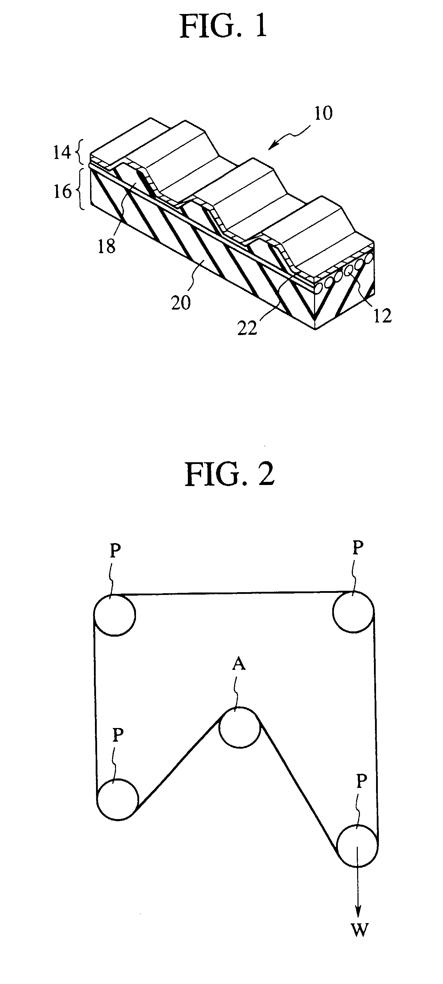

The toothed belt in accordance with the invention has a structure similar to that of a conventional toothed belt. As shown in FIG. 1, toothed belt 10 in accordance with the invention is composed of core wires 12, or other suitable tension bearing members, sandwiched by a tooth portion 14 and a back portion 16. The tooth portion 14 comprises a tooth rubber 18, and the back portion 16 comprises a back rubber 20. The entire tooth surface is covered by a tooth cloth 22 which usually comprises polyamide (nylon) or a similar material.

The tooth cloth 22 has been treated with a certain treating agent comprising a mixture of RF (resorcinol formaldehyde) solution and L (latex) solution at a predetermined ratio, and including a predetermined amount of carbon.

RF solution is obtained by mixing resorcinol and formaldehyde at a predetermined ratio and adding sodium hydroxide and pure, or purified, water. L solution may be obtained by mixing carboxyl modified nitrile butadiene rubber and carboxyl modified hydrogenated nitrile butadiene rubber at a predetermined ratio and adding ammonia and pure, or purified, water.

The following tables illustrate various examples of the treating agents, namely RFL solutions. The toothed belt according to the invention is treated with the RFL solutions of examples 2 or 3. Examples 1 and 4 to 9 are comparative examples.

### [Tables]

Experiments were conducted to determine the adhesive strength, the heat-resisting strength retention of the tooth cloth, the amount of wear and the tooth breaking time.

FIG. 2 illustrates schematically the equipment for testing the amount of wear of the tooth cloth. A belt having 124 teeth at a pitch of 8 mm. is run at 4000 revolutions per minute over a set of four plain pulleys P and a toothed pulley A, at a temperature of 140° C. A constant weight W is applied to one of the pulleys P, as shown, and the time is the same for each test. The condition as shown in FIG. 2 is the condition A referred to in the table.

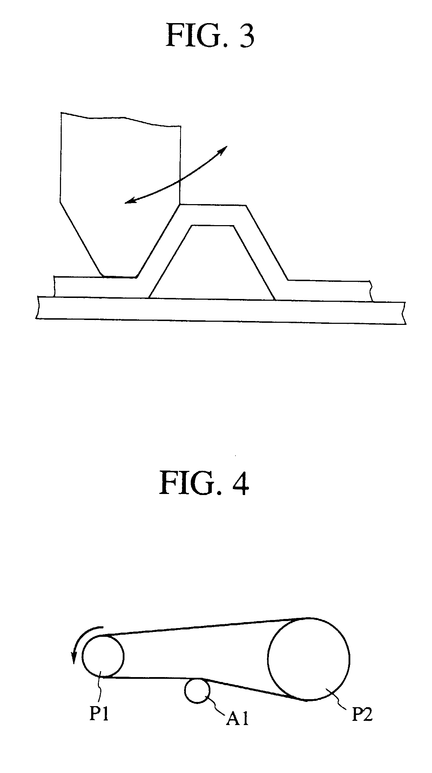

FIG. 3 also schematically shows testing equipment for determining tooth breaking time in a belt having teeth of constant width, by applying a constant force against a tooth at a temperature of 100° C. The condition as shown in FIG. 3 is the condition B referred to in the table.

FIG. 4 illustrates equipment for testing tooth breaking time by applying tension to the belt. Here a belt having 124 teeth at a pitch of 8mm is run over a pair of pulleys P1 and P2, having 22 and 44 teeth respectively. The lower run of the belt passes over an idler pulley A1 having a diameter of 60 mm. An initial tension of 118 N (12 kgf) is applied to the belt. The pulley P1 is rotated at 3000 rpm. The condition shown in FIG. 4 corresponds to conditions C-1 and C-2 in the table. More particularly, condition C-1 corresponds to a constant load tension of certain F kgf, and the condision C-2 corresponds to a load tension of 0.61 X F kgf. The load tensions are in addition to the initial tension.

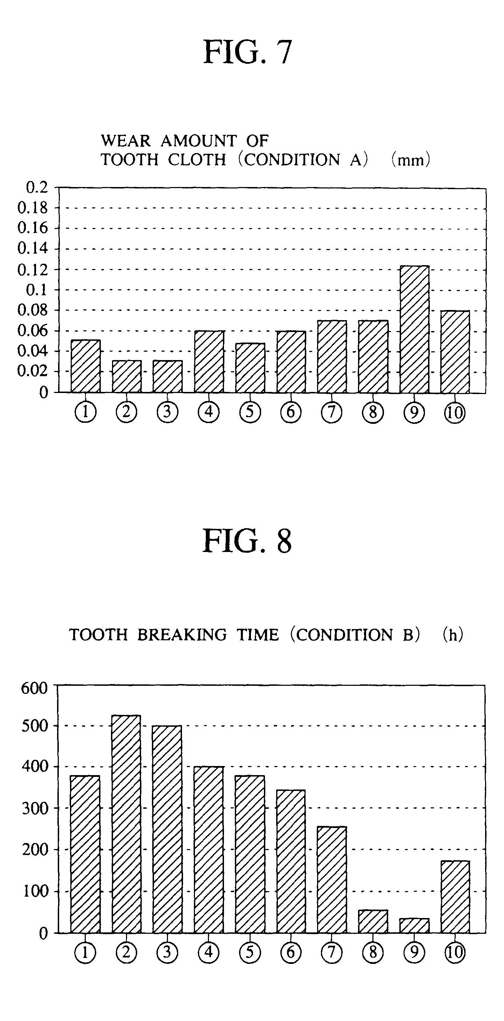

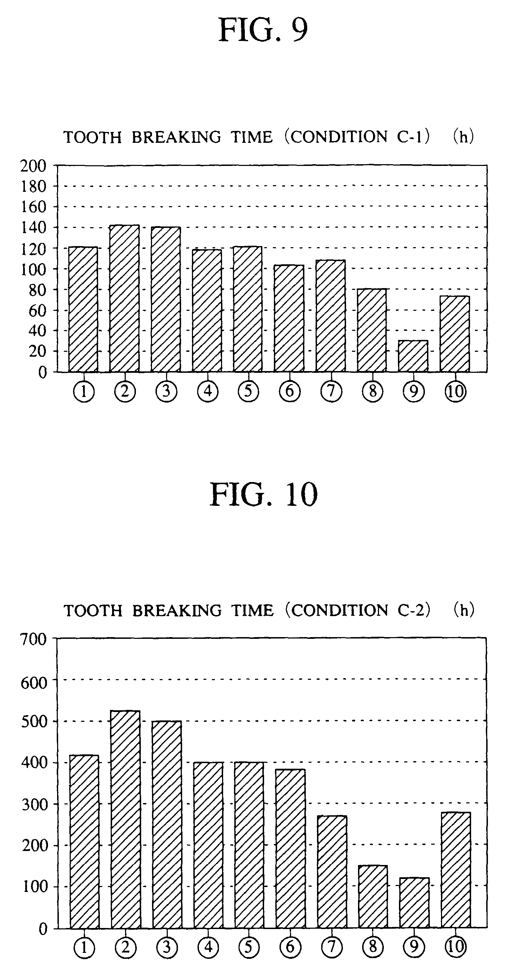

The lower parts of the tables indicate the results of various measurements. FIGs. 7 to 10 show the test results under conditions A, B, C-1 and C-2, respectively.

Referring to the tables, Example 1 is a comparative example wherein the latex (L) solution does not contain carboxyl modified nitrile butadiene rubber.

Example 4 is also a comparative example in which the weight ratio of carboxyl modified nitrile butadiene rubber relative to carboxyl modified hydrogenated nitrile butadiene rubber in the L solution is 5:5.

Example 5 is a comparative example in which the RFL solution does not contain carbon. In every other case, carbon is present in an amount equal to 2% by weight of the RFL solution, being introduced as a 10% dispersion in water.

Example 6 is a comparative example in which the L solution does not contain carboxyl modified hydrogenated nitrile butadiene rubber.

Lastly, Examples 7 to 9 are comparative examples in which the L solution contains only hydrogenated nitrile butadiene rubber, nitrile butadiene rubber or VP (vinyl pyridine) and SBR (styrene butadiene rubber), respectively.

By comparing examples 2 and 3 with comparative examples 1 and 4-9, it will be noted that the toothed belt according to the invention is remarkably superior to the comparative examples with respect to the amount of wear and tooth breaking strength, despite the fact that it is somewhat inferior to the comparative examples in terms of heat-resistance.

According to the invention, the antiwear property of the tooth cloth may be improved remarkably by taking advantage of the change of physical property of the treating agent which normally has an adverse effect, namely the change in the physical property of the treating agent due to heat degradation. The specific treating agents used in this invention become hardened due to heat degradation, and afford a superior anti-wear property to the tooth cloth. As a result, the tooth breaking time of a toothed belt, which is one of the main factors affecting performance of a toothed belt, is significantly prolonged.

Various departures from the specific examples set forth above will occur to persons skilled in the art, and may be made within the scope of the invention as defined in the following claims.

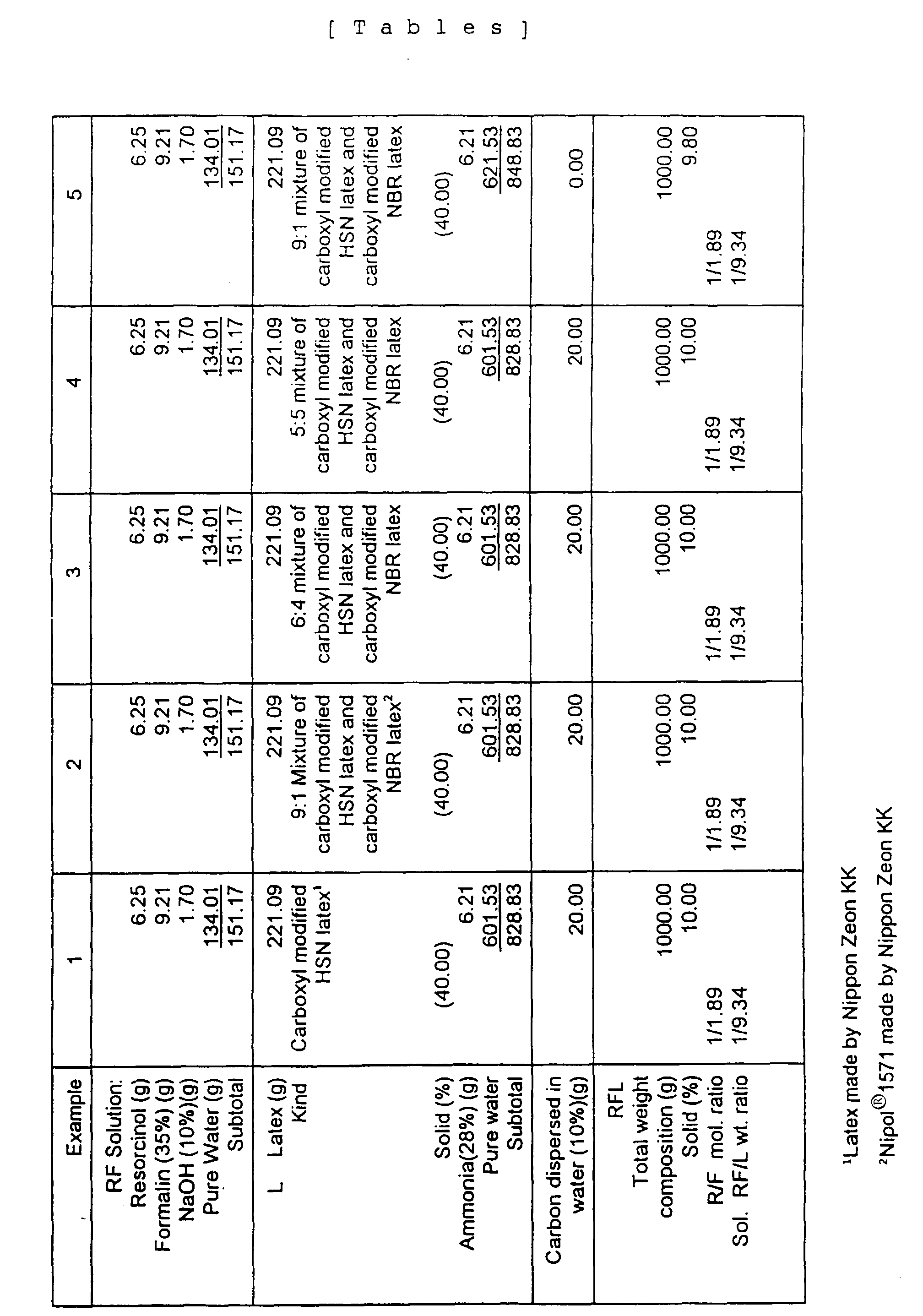

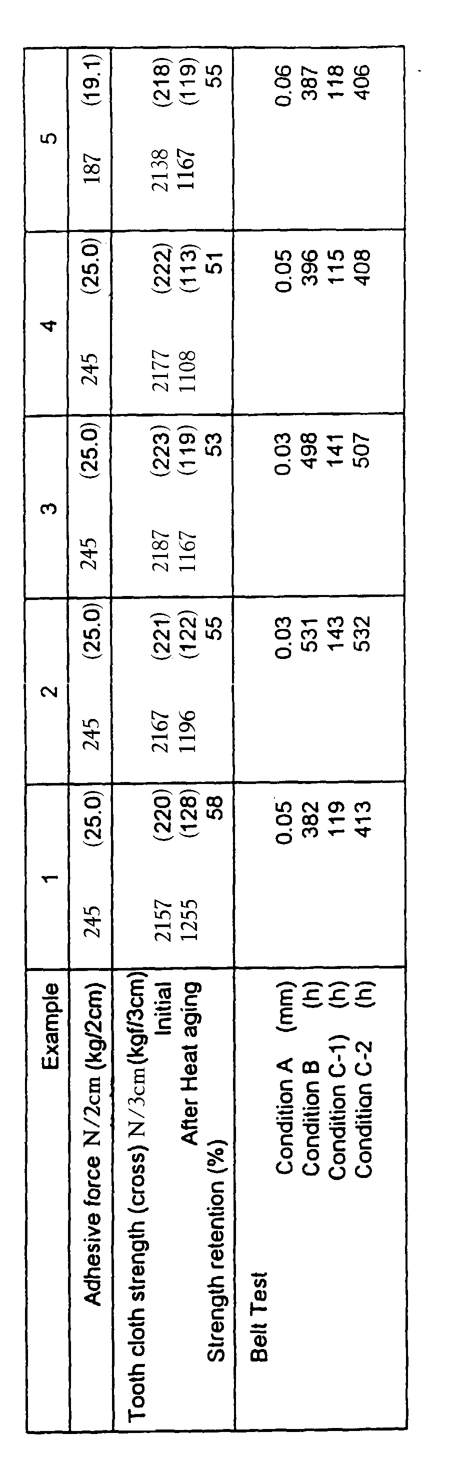

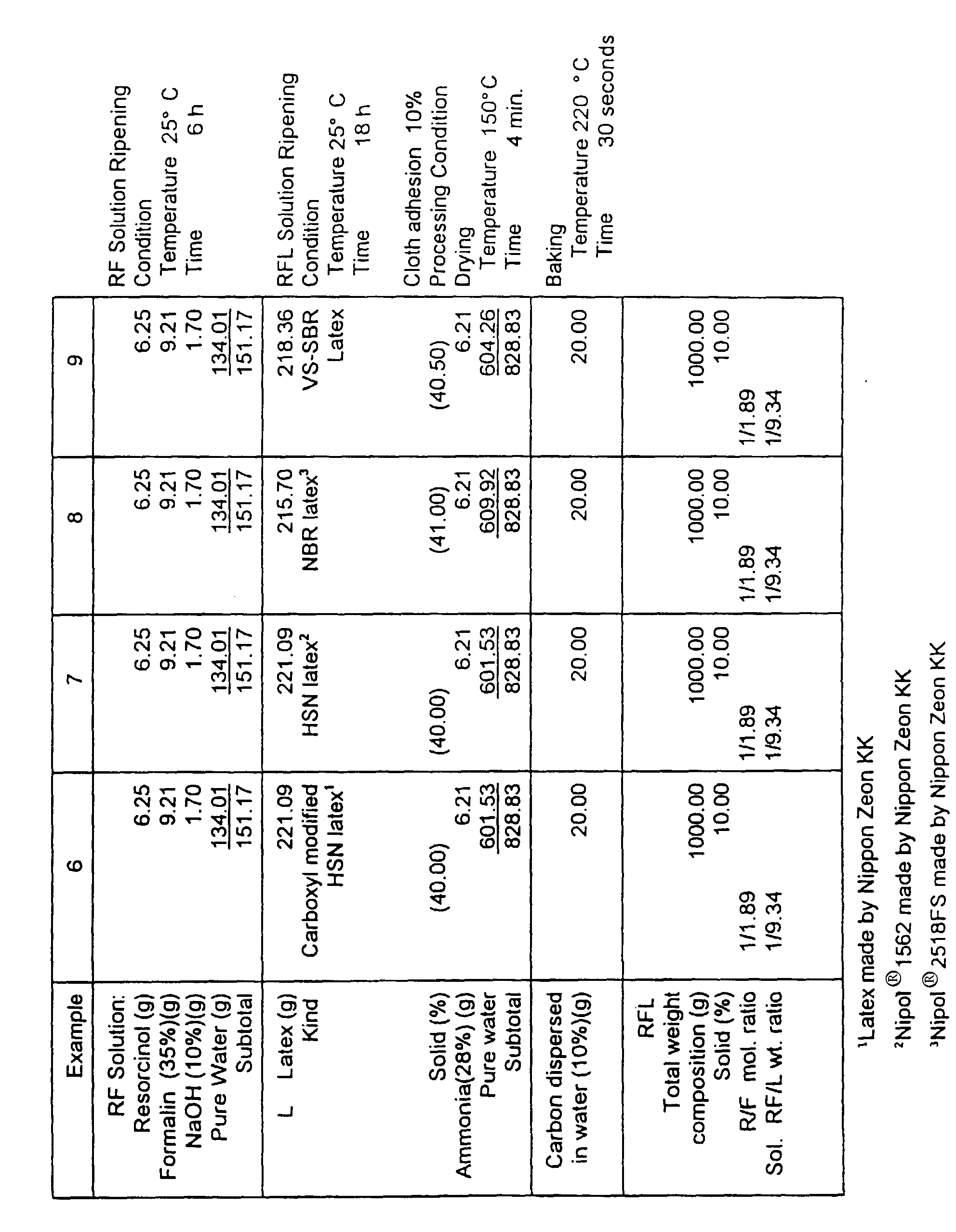

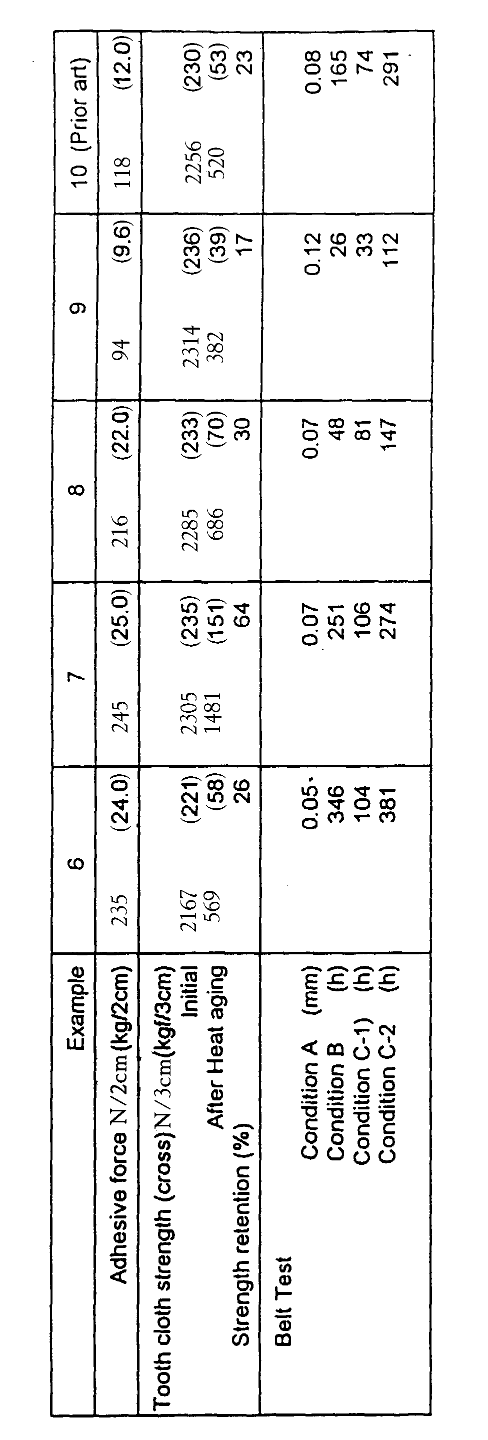

## Claims

1. A toothed belt comprising a tooth rubber and a back rubber with an embedded tension bearing member, and a tooth cloth covering the tooth rubber, in which the tooth cloth has been treated with a resorcinol formaldehyde latex solution containing a mixture at the weight ratio from 1:5 to 1:15 of a resorcinol formaldehyde solution containing resorcinol and formaldehyde at a molecular ratio from 1:1 to 1:3 and a latex solution containing carboxyl modified nitrile butadiene rubber and carboxyl modified hydrogenated nitrile rubber at a weight ratio from 4:6 to 1:9; in which the resorcinol formaldehyde latex solution further contains from 1% to 10% by weight of carbon; and in which the solid content adhered onto the tooth cloth is from 5 to 30 weight %.

2. A method for producing a toothed belt comprising a tooth rubber and a back rubber with an embedded tension bearing member, and a tooth cloth covering the tooth rubber, comprising the steps of:
preparing a resorcinol formaldehyde latex solution by mixing, at a weight ratio from 1:5 to 1:15, a resorcinol formaldehyde latex solution containing a mixture of a resorcinol formaldehyde solution containing resorcinol and formaldehyde at a molecular ratio from 1:1 to 1:3 and a latex solution containing carboxyl modified nitrile butadiene rubber and carboxyl modified hydrogenated nitrile rubber at a weight ratio from 4:6 to 1:9, the resorcinol formaldehyde latex solution further incorporating 1% to 10% by weight of carbon;
treating the tooth cloth with said resorcinol formaldehyde latex solution so that the solid content of the resorcinol formaldehyde latex solution adheres to the tooth cloth at a weight ratio of 5 to 30 %; and
covering said tooth rubber with said tooth cloth.

## Patentansprüche

1. Zahnriemen, umfassend einen Zahngummi und einen Rückseitengummi mit einem eingebetteten Zugspannungslagerglied und ein Zahngewebe, das den Zahngummi abdeckt, bei dem das Zahngewebe mit einer Resorcin-Formaldehyd-Latex-Lösung behandelt worden ist, die ein Gemisch in dem Gewichtsverhältnis von 1:5 bis 1:15 einer Resorcin-Formaldehyd-Lösung, die Resorcin und Formaldehyd in einem Molekularverhältnis von 1:1 bis 1:3 enthält, und einer Latex-Lösung enthält, die carboxylmodifizierten Nitril-Butadien-Gummi und carboxylmodifizierten hydrierten Nitril-Gummi in einem Gewichtsverhältnis von 4:6 bis 1:9 enthält, bei dem die Resorcin-Formaldehyd-Latex-Lösung weiterhin Kohlenstoff von 1 bis 10 Gew.-% enthält und bei dem der auf dem Zahngewebe angehaftete Feststoffgehalt von 5 bis 30 Gew.-% beträgt.

2. Verfahren zum Herstellen eines Zahnriemens, umfassend einen Zahngummi und einen Rückseitengummi mit einem eingebetteten Zugspannungslagerglied und ein Zahngewebe, das den Zahngummi abdeckt, umfassend die Schritte:
- Ansetzen einer Resorcin-Formaldehyd-Latex-Lösung durch Mischen einer Resorcin-Formaldehyd-Latex-Lösung in einem Gewichtsverhältnis von 1:5 bis 1:15, die ein Gemisch einer Resorcin-Formaldehyd-Lösung, die Resorcin und Formaldehyd in einem Molekularverhältnis von 1:1 bis 1:3 enthält, und einer Latex-Lösung enthält, die carboxylmodifizierten Nitril-Butadien-Gummi und carboxylmodifizierten hydrierten Nitril-Gummi in einem Gewichtsverhältnis von 4:6 bis 1:9 enthält, wobei die Resorcin-Formaldehyd-Latex-Lösung weiterhin 1 bis 10 Gew.-% an Kohlenstoff vereinigt;
- Behandeln des Zahngewebes mit der Resorcin-Formaldehyd-Latex-Lösung, so daß der Feststoffgehalt der Resorcin-Formaldehyd-Latex-Lösung in einem Gewichtsverhältnis von 5 bis 30 % an dem Zahngewebe anhaftet, und
- Abdecken des Zahngummis mit dem Zahngewebe.

## Revendications

1. Courroie crantée comprenant une couche crantée de caoutchouc et une couche dorsale entre lesquelles est enrobé un élément de résistance à la tension, et une toile recouvrant le caoutchouc cranté, courroie dans laquelle la toile de recouvrement a été traitée avec une solution de latex à la résorcine formaldéhyde contenant un mélange dans le rapport en poids de 1:5 à 1:15 de solutions de résorcine et de formaldéhyde dans un rapport moléculaire de 1:1 à 1:3 et une solution de latex contenant du caoutchouc nitrile butadiène carboxylé et du caoutchouc nitrile hydrogéné carboxylé dans un rapport en poids de 4:6 à 1:9, dans laquelle la solution de latex à la résorcine formaldéhyde contient en outre 1% à 10% en poids de carbone; et dans laquelle la teneur en solides adhérant à la toile de recouvrement est de 5 à 30 % en poids.

2. Procédé de fabrication d'une courroie crantée comprenant une couche crantée de caoutchouc et une couche dorsale entre lesquelles est enrobé un élément de résistance à la tension, et une toile recouvrant le caoutchouc cranté, comprenant les étapes suivantes:
la préparation d'une solution de latex à la résorcine formaldéhyde par le mélange, dans un rapport en poids de 1:5 à 1:15, d'une solution de latex à la résorcine formaldéhyde contenant un mélange d'une solution de résorcine formaldéhyde contenant de la résorcine et de la formaldéhyde dans un rapport moléculaire de 1:1 à 1:3 et d'une solution de latex contenant du caoutchouc nitrile butadiène carboxylé et du caoutchouc nitrile hydrogéné carboxylé dans un rapport en poids de 4:6 à 1:9; la solution de latex à la résorcine formaldéhyde comprenant en outre de 1% à 10% de carbone;
le traitement de la toile crantée avec ladite solution de latex à la résorcine formaldéhyde de manière telle que la teneur en solides de ladite solution qui adhère à la toile crantée soit de 5 à 30 % en poids; et
le recouvrement par ladite toile dudit caoutchouc cranté.
